# EUROPÄISCHE PATENTSCHRIFT

(11) **EP 3 481 616 B1**
(45) Veröffentlichungstag und Bekanntmachung des Hinweises auf die Patenterteilung: **31.08.2022**
(21) Anmeldenummer: 17740668.3
(22) Anmeldetag: 06.07.2017
(51) Int. Cl.: B29C 48/30, B29C 48/09, B29C 48/13, B29C 49/00, B29C 33/30

(54) **CORRUGATOR, EXTRUSIONSANLAGE SOWIE VERFAHREN**
CORRUGATOR, EXTRUSION SYSTEM AND METHOD
MACHINE À ONDULER, INSTALLATION D'EXTRUSION ET PROCÉDÉ

(30) Priorität: 06.07.2016 DE 102016112421
(43) Veröffentlichungstag der Anmeldung: 15.05.2019
(73) Patentinhaber: Delfingen FR-Anteuil S.A., 25340 Anteuil (FR)
(72) Erfinder: STAVARIU, Alin, 85586 Poing (DE)
(74) Vertreter: Horn Kleimann Waitzhofer Patentanwälte PartG mbB
(86) Internationale Anmeldenummer: PCT/EP2017/066917
(87) Internationale Veröffentlichungsnummer: WO 2018/007512

(56) Entgegenhaltungen:
- WO-A1-2007/058548
- DE-A1- 19 845 321
- DE-U1- 20 007 270
- DE-U1-202005 021 219
- US-A1- 2002 113 339

## Beschreibung

Die vorliegende Erfindung betrifft einen Corrugator für eine Extrusionsanlage, eine Extrusionsanlage mit einem derartigen Corrugator sowie ein Verfahren zum Betreiben eines derartigen Corrugators.

Ein Corrugator ist eine in der Kunststoffverarbeitung verwendete Maschine, die zur Herstellung von gewellten Kunststoffrohren oder Kunststoffschläuchen Anwendung findet. Derartige Kunststoffprodukte können auch als Wellrohre oder Wellschläuche bezeichnet werden. Mit Hilfe eines derartigen Corrugators kann ein endloses Kunststoffprodukt gefertigt werden, das anschließend abgelängt wird. Der Corrugator formt einen von einem Spritzkopf eines Extruders zur Verfügung gestellten Kunststoffschmelzestrom zu einem Schlauch um. Der Corrugator umfasst weiterhin eine Vielzahl an Formbacken, die eine Negativform einer Außengeometrie des Kunststoffprodukts darstellen. Der von dem Spritzkopf zur Verfügung gestellte Kunststoffschlauch kann mit Hilfe von Druckluft innenseitig gegen die Formbacken gedrückt werden, wodurch sich die Außengeometrie des Kunststoffprodukts ergibt. Über die Formbacken kann dem Kunststoffmaterial auch ein Großteil der Wärmeenergie entzogen werden.

Die DE 195 35 231 A1 beschreibt eine Vorrichtung zur Herstellung von Rohren aus thermoplastischem Kunststoff mit Querprofilierung. Die Vorrichtung umfasst auf einer Formstrecke paarweise im Kreislauf geführte Formabschnittshälften. Es ist ferner eine Transportvorrichtung zur Rückführung der Formabschnittshälften vorgesehen, die nach Art eines Brückenkranes ausgebildet ist. Auf einer die Formstrecke übergreifenden Transportbrücke sind zwei quer zur Produktionsrichtung und gegensinnig zueinander verfahrbare Transportwagen vorgesehen, an denen jeweils ein nach unten gerichteter Transportarm mit einer Haltevorrichtung für je eine Formabschnittshälfte angebracht ist.

Die US 6,485,286 B1 zeigt einen Corrugator mit zwei unterschiedlichen Typen an Formbacken. Der Corrugator umfasst eine Austauscheinrichtung, mit deren Hilfe einzelne Formbacken senkrecht zu einer Bewegungsrichtung der Formbacken im Betrieb des Corrugators ausgetauscht werden können.

Die DE 198 45 321 A1 beschreibt eine Vorrichtung zum Herstellen von glatten Kunststoffrohren aus teilkristallinen Kunststoffmaterialien und zur Ausformung von sektionalen Wellungen in definierbaren Abständen ohne störende Oberflächenmarkierungen im glatten Bereich zwischen den gewellten Sektionen, wobei die Formeinheit in eine in sich geschlossene und mit einem Kühlmedium gefluteten Vakuumkammer eingebaut ist, vom Kühlmedium völlig umspült wird und direkt nach der Vorkalibrierung positioniert wird.

Die US 2002/0113339 A1 beschreibt eine Vorrichtung zum Formgeben eines schlauchförmigen Kunststoffprodukts. Die Vorrichtung umfasst Formbacken, die paarweise entlang einer Führungsbahn geführt sind. Entlang zweier Rücklaufbahnen werden die Formbacken einzeln von einem Ausgang der Führungsbahn zu einem Eingang derselben gefördert. Es ist ferner eine Austauscheinrichtung vorgesehen, mit deren Hilfe der Führungsbahn einzelne Formbacken entnommen oder in diese eingeführt werden können.

Die DE 200 07 270 U1 zeigt ein System zum Austausch von Formblöcken in einer Formvorrichtung mit bewegtem Formtunnel. Dabei werden die Formblöcke ohne Unterbrechung des Betriebs der Formvorrichtung ausgetauscht.

Die DE 20 2005 021 219 U1 beschreibt eine Vorrichtung zur Herstellung von Wellrohren aus thermoplastischem Kunststoff, bei der in einem Kreislauf sich paarweise ergänzende Formbacken gemeinsam entlang einer sich an einen Spritzkopf anschließenden Formstrecke geführt, am Ende der Formstrecke auseinander gefahren und separat voneinander zu deren Anfang zurückgeführt werden. Die Vorrichtung umfasst eine Formstreckeneinrichtung zur Bewegung der Formbacken entlang der Formstrecke, die einen Maschinentisch mit Antriebsmitteln für die Formbacken auf der Formstrecke aufweist, und eine Rückfördereinrichtung zur Rückförderung der Formbacken vom Ende der Formstrecke zu deren Anfang, die eine Auslaufbaugruppe zum Auseinanderfahren der Formbacken am Ende der Formstrecke und/oder eine Einlaufbaugruppe zum Hineinfahren der Formbacken am Anfang der Formstrecke aufweist.

Die WO 2007/058548 A1 zeigt eine Formvorrichtung zum Formen eines formbaren Materials oder von Materialien. Die Vorrichtung umfasst einen ersten Formwerkzeugsatz und einen zweiten Formwerkzeugsatz. Jedes Formwerkzeug des zweiten Formwerkzeugsatzes kann mit einem oder mehreren Formwerkzeugen des ersten Formwerkzeugsatzes oder umgekehrt zusammenwirken, um ein zusammenwirkendes Formwerkzeug in einer Druckformzone zu bilden. Es ist eine erste Formwerkzeugsatzführung vorgesehen, über die der erste Formwerkzeugsatz um eine erste Schaltung bewegt werden kann. Es ist auch eine zweite Formwerkzeugsatzführung vorgesehen, um die der zweite Formwerkzeugsatz um eine zweite Schaltung bewegt werden kann.

Vor diesem Hintergrund besteht eine Aufgabe der vorliegenden Erfindung darin, einen verbesserten Corrugator zur Verfügung zu stellen.

Demgemäß wird ein Corrugator für eine Extrusionsanlage zur Formgebung eines schlauchförmigen Kunststoffprodukts vorgeschlagen. Der Corrugator umfasst eine Vielzahl Formbacken, eine Führungsbahn, entlang welcher die Formbacken im Betrieb des Corrugators von einem Anfangsbereich der Führungsbahn hin zu einem Ausgangsbereich der Führungsbahn jeweils paarweise geführt sind, zwei erste Rücklaufbahnen, welche beidseits der Führungsbahn angeordnet sind und entlang welcher die Formbacken im Betrieb des Corrugators von dem Ausgangsbereich hin zu dem Anfangsbereich geführt sind, und zwei zweite Rücklaufbahnen, welche ebenfalls beidseits der Führungsbahn angeordnet sind und mit deren Hilfe im Betrieb des Corrugators einzelne Formbacken aus der ersten Rücklaufbahn ausschleusbar und/oder in diese einschleusbar sind, wobei die zweiten Rücklaufbahnen zwischen der Führungsbahn und den ersten Rücklaufbahnen angeordnet sind.

Dadurch, dass einzelne Formbacken aus der ersten Rücklaufbahn in die zweite Rücklaufbahn ausschleusbar und/oder von der zweiten Rücklaufbahn in die erste Rücklaufbahn einschleusbar sind, kann eine Abfolge der Formbacken entlang der Führungsbahn geändert werden, ohne dass die Extrusionsanlage angehalten werden muss. Hierdurch ergeben sich ein deutlich geringerer Rüstaufwand und weniger Anfahrausschuss. Es können auch kleine Stückzahlen des Kunststoffprodukts hergestellt werden, wodurch eine reduzierte Lagerhaltung möglich ist. Eine Teilesortierung des abgelängten Kunststoffprodukts kann automatisch erfolgen. Durch die automatische Formbackenzusammenstellung ergeben sich weniger Fehlerquellen. Die Formbacken können problemlos bei laufendem Corrugator ausgetauscht werden.

Insbesondere sind im Betrieb des Corrugators mit Hilfe der zweiten Rücklaufbahn einzelne Formbacken aus einer beliebigen Abfolge von Formbacken aus der ersten Rücklaufbahn ausschleusbar, wobei diese ausgeschleusten Formbacken dann in der zweiten Rücklaufbahn aufgenommen sind. Die nicht ausgeschleusten Formbacken wiederum sind mit Hilfe der ersten Führungsbahn von dem Ausgangsbereich hin zu dem Anfangsbereich geführt, um diese wieder der Führungsbahn zuzuführen. Umgekehrt sind im Betrieb des Corrugators mit Hilfe der zweiten Rücklaufbahn einzelne Formbacken in eine beliebige Abfolge von Formbacken in der ersten Rücklaufbahn einschleusbar, wobei diese eingeschleusten Formbacken dann zusammen mit den restlichen Formbacken mit Hilfe der ersten Rücklaufbahn der Führungsbahn zugeführt werden. Das heißt, die Formgebung des Kunststoffprodukts wird sowohl zum Einschleusen als auch zum Ausschleusen einzelner Formbacken nicht unterbrochen. Insbesondere sind bei dem Corrugator auch mehrere Formbacken nacheinander aus der ersten Rücklaufbahn ausschleusbar und/oder in diese einschleusbar.

Das heißt insbesondere, dass nach dem paarweisen Durchlauf der Formbacken durch die Führungsbahn nicht alle hintereinander platzierten Formbacken voneinander getrennt und neu sortiert werden müssen, bevor sie wieder der Führungsbahn zugeführt werden. Vielmehr wird der Durchlauf der nicht ausgeschleusten Formbacken durch die Führungsbahn und die erste Rücklaufbahn nicht unterbrochen. Das heißt, diese bewegen sich im Betrieb des Corrugators kontinuierlich entlang der Führungsbahn und der ersten Rücklaufbahn. Insbesondere bilden die Führungsbahn und die erste Rücklaufbahn eine durchlaufende Abfolge oder Kette von miteinander verbundenen Formbacken, aus der einzelne Formbacken ausschleusbar und/oder in die einzelne Formbacken einschleusbar sind. Das heißt, es erfolgt im Betrieb des Corrugators stets eine durchlaufende Bewegung der Formbacken entlang der Führungsbahn und der ersten Rücklaufbahn.

Insbesondere ist darunter, dass einzelne Formbacken ausschleusbar und/oder einschleusbar sind, zu verstehen, dass aus der Abfolge oder Kette nacheinander angeordneter Formbacken, die entlang der ersten Rücklaufbahn geführt sind, wahlweise bestimmte Formbacken aus der ersten Rücklaufbahn entnehmbar und der zweiten Rücklaufbahn zuführbar sind. Die verbleibenden Formbacken laufen dann kontinuierlich um die Führungsbahn und die erste Rücklaufbahn um. Das heißt insbesondere, dass die kontinuierliche Bewegung der verbleibenden oder nicht ausgeschleusten Formbacken entlang der Führungsbahn und der ersten Rücklaufbahn während der Formgebung des schlauchförmigen Kunststoffprodukts nicht unterbrochen wird. Analoges gilt für das Einschleusen der einzelnen Formbacken in die erste Rücklaufbahn. Unter "einzeln" ist auch zu verstehen, dass immer Paare an einzelnen Formbacken ausgeschleust und/oder eingeschleust werden. Ein derartiges Paar umfasst immer eine rechte oder erste Formbacke und eine zweite oder linke Formbacke. Diese Paare an Formbacken laufen zusammen entlang der Führungsbahn und voneinander getrennt entlang der ersten Rücklaufbahn. Die ausgeschleusten und/oder eingeschleusten einzelnen Formbacken können auch mehrere, beispielsweise zwei oder drei, benachbart angeordnete Formbacken umfassen. Das heißt, der Begriff "einzelne Formbacken" bedeutet nicht zwingend nur eine Formbacke.

Beispielsweise kann die zweite Rücklaufbahn als Förderband ausgebildet sein, das dazu geeignet ist, die ausgeschleusten Formbacken von dem Ausgangsbereich hin zu dem Anfangsbereich zu fördern. Insbesondere können an dem Anfangsbereich zwei erste Umlenkeinrichtungen vorgesehen sein. Die ersten Umlenkeinrichtungen können beispielsweise als Zahnräder, Rollen, Führungsschienen oder dergleichen ausgebildet sein. Weiterhin sind an dem Ausgangsbereich bevorzugt zwei zweite Umlenkeinrichtungen vorgesehen. Die ersten Umlenkeinrichtungen lenken die Formbacken von der Führungsbahn insbesondere auf die erste Rücklaufbahn um. Vorzugsweise sind zwei parallel zueinander verlaufende erste Rücklaufbahnen vorgesehen, zwischen denen die Führungsbahn positioniert ist. An den ersten Umlenkeinrichtungen werden die Formbacken von den ersten Rücklaufbahnen paarweise zusammengeführt, um anschließend die Führungsbahn zu durchlaufen. Analog dazu werden an den zweiten Umlenkeinrichtungen die durch die Führungsbahn gelaufenen Paare an Formbacken aufgetrennt und jeweils einer der ersten Rücklaufbahnen zugeführt.

Das Kunststoffprodukt ist insbesondere ein Wellschlauch oder ein Wellrohr. Das Kunststoffprodukt wird mit Hilfe der Extrusionsanlage vorzugsweise als Endlosprodukt gefertigt und stromabwärts des Corrugators auf die gewünschte Länge abgelängt.

Erfindungsgemäß umfasst der Corrugator - wie zuvor erwähnt - zwei erste Rücklaufbahnen, die beidseits der Führungsbahn angeordnet ist, sowie zwei zweite Rücklaufbahnen, die ebenfalls beidseits der Führungsbahn angeordnet sind. Dabei sind die zweiten Rücklaufbahnen zwischen der Führungsbahn und den ersten Rücklaufbahnen angeordnet. Es können auch noch eine dritte bis n-te Rücklaufbahn, insbesondere jeweils zwei dritte bis n-te Rücklaufbahnen, die jeweils beidseits der Führungsbahn angeordnet sind, vorgesehen sein, wobei die dritte bis n-te Rücklaufbahn zwischen der zweiten Rücklaufbahn und der Führungsbahn angeordnet ist.

Eine jeweilige Kavität der Formbacken ist rotationssymmetrisch zu einer Mittelachse aufgebaut und umfasst einen Umfangswinkel von 180°. Das heißt, mit Hilfe eines Paares an Formbacken wird ein Negativ einer Außengeometrie des Kunststoffprodukts bereitgestellt. Unter "paarweise" ist zu verstehen, dass immer zwei identische Formbackentypen zusammengefügt sind. Es kann eine Vielzahl an unterschiedlichen Typen an Formbacken vorgesehen sein, die jeweils individuell geformte Kavitäten aufweisen. Eine "Kavität" ist vorliegend als ein Hohlraum zu verstehen, der das Negativ der Außengeometrie des Kunststoffprodukts bildet.

Das Kunststoffprodukt wird bevorzugt als noch nicht erstarrter Kunststoffschlauch zwischen die Paare an Formbacken eingebracht und anschließend beispielsweise mit Druckluft innenseitig gegen die jeweilige Kavität der Formbacken gepresst. Hierdurch ergibt sich die gewünschte Außengeometrie des Kunststoffprodukts. Darunter, dass die Formbacken aus der ersten Rücklaufbahn "ausschleusbar" sind, ist zu verstehen, dass wahlweise bestimmte Formbacken im Produktionsbetrieb des Corrugators, das heißt, während die Formbacken entlang der Führungsbahn gefördert werden, aus der ersten Rücklaufbahn entnommen werden können und der zweiten Rücklaufbahn zugeführt werden. Darunter, dass die einzelnen Formbacken aus der zweiten Rücklaufbahn in die erste Rücklaufbahn "einschleusbar" sind, ist zu verstehen, dass im Produktionsbetrieb des Corrugators wahlweise einzelne Formbacken aus der zweiten Rücklaufbahn in die erste Rücklaufbahn eingefügt werden können. Da die Formbacken entlang der Führungsbahn immer paarweise geführt sind, arbeiten die beiden ersten Rücklaufbahnen und die beiden zweiten Rücklaufbahnen jeweils simultan und/oder synchron. Das heißt, wenn von einer zweiten Rücklaufbahn eine Formbacke in eine erste Rücklaufbahn eingeschleust wird, wird gleichzeitig aus der anderen zweiten Rücklaufbahn eine Formbacke in die andere erste Rücklaufbahn eingeschleust.

Vorzugsweise umfasst der Corrugator eine Vielzahl erster Formbacken, wobei jede erste Formbacke eine erste Kavität aufweist, eine Vielzahl zweiter Formbacken, wobei jede zweite Formbacke eine sich von der ersten Kavität geometrisch unterscheidende zweite Kavität aufweist, eine Führungsbahn, entlang welcher die ersten Formbacken und die zweiten Formbacken im Betrieb des Corrugators von einem Anfangsbereich der Führungsbahn hin zu einem Ausgangsbereich der Führungsbahn jeweils paarweise geführt sind, eine erste Rücklaufbahn, entlang welcher die ersten Formbacken und die zweiten Formbacken im Betrieb des Corrugators von dem Ausgangsbereich hin zu dem Anfangsbereich geführt sind, und eine zweite Rücklaufbahn, mit deren Hilfe im Betrieb des Corrugators einzelne erste Formbacken und/oder einzelne zweite Formbacken aus der ersten Rücklaufbahn ausschleusbar und/oder in diese einschleusbar sind.

Gemäß einer Ausführungsform ist eine Bewegungsrichtung der einzelnen Formbacken bei einem Ausschleusen derselben aus der ersten Rücklaufbahn und/oder bei einem Einschleusen derselben in die erste Rücklaufbahn jeweils schräg in einem Winkel relativ zu einer Bewegungsrichtung der Formbacken entlang der ersten Rücklaufbahn orientiert.

Der Winkel kann beispielsweise 10° bis 30° betragen. Dieser Winkel kann als erster Winkel bezeichnet werden. Insbesondere ist der erste Winkel zwischen der Bewegungsrichtung bei dem Ausschleusen und/oder bei dem Einschleusen der einzelnen Formbacken und der Bewegungsrichtung der Formbacken entlang der ersten Rücklaufbahn ungleich 90°. Bei einem Ausschleusen der einzelnen Formbacken von der ersten Rücklaufbahn in die zuvor erwähnte dritte bis n-te Rücklaufbahn ist eine Bewegungsrichtung der einzelnen Formbacken ebenfalls schräg in einem Winkel relativ zu der Bewegungsrichtung der Formbacken entlang der ersten Führungsbahn orientiert. Dieser Winkel kann als zweiter Winkel bezeichnet werden. Analoges gilt für das Ausschleusen der einzelnen Formbacken von der ersten Rücklaufbahn in die dritte bis n-te Rücklaufbahn. Dieser der dritten Rücklaufbahn zugeordnete zweite Winkel ist dabei größer als der der zweiten Rücklaufbahn zugeordnete erste Winkel der Bewegungsrichtung der einzelnen Formbacken bei dem Einschleusen und/oder dem Ausschleusen derselben. Das heißt, der erste Winkel und der zweite Winkel sind ungleich, wobei der zweite Winkel bevorzugt größer als der erste Winkel ist. Der zweite Winkel kann 20° bis 30° betragen.

Gemäß einer weiteren Ausführungsform umfasst der Corrugator ferner eine erste Umlenkeinrichtung zum Umlenken der Formbacken von der ersten Rücklaufbahn in die Führungsbahn und eine zweite Umlenkeinrichtung zum Umlenken der Formbacken von der Führungsbahn in die erste Rücklaufbahn, wobei sich die Formbacken im Betrieb des Corrugators kontinuierlich entlang der Führungsbahn und der ersten Rücklaufbahn bewegen.

Das heißt, die Formbacken laufen im Betrieb des Corrugators um die Führungsbahn und die erste Rücklaufbahn kontinuierlich um. Insbesondere ist eine Bewegungsrichtung der Formbacken entlang der Führungsbahn entgegengesetzt einer Bewegungsrichtung der Formbacken entlang der ersten Rücklaufbahn orientiert. Bevorzugt sind zwei erste Umlenkeinrichtungen und zwei zweite Umlenkeinrichtungen vorgesehen. Die erste Umlenkeinrichtung ist insbesondere dem Anfangsbereich zugeordnet. Die zweite Umlenkeinrichtung ist insbesondere dem Ausgangsbereich zugeordnet. Insbesondere sind die einzelnen Formbacken während der kontinuierlichen Bewegung der Formbacken entlang der Führungsbahn und der ersten Rücklaufbahn mit Hilfe der zweiten Rücklaufbahn aus der ersten Rücklaufbahn ausschleusbar und/oder in diese einschleusbar.

Gemäß einer weiteren Ausführungsform umfasst der Corrugator ferner eine Ausschleuseinrichtung zum wahlweisen Ausschleusen der einzelnen Formbacken aus der ersten Rücklaufbahn in die zweite Rücklaufbahn.

Bevorzugt umfasst der Corrugator eine Ausschleuseinrichtung zum wahlweisen Ausschleusen einzelner erster Formbacken und/oder einzelner zweiter Formbacken aus der ersten Rücklaufbahn in die zweite Rücklaufbahn. Vorzugsweise sind zwei derartige Ausschleuseinrichtungen vorgesehen. Jeder zweiten Rücklaufbahn ist eine derartige Ausschleuseinrichtung zugeordnet. Die Ausschleuseinrichtung kann beispielsweise ein Förderband sein oder als Förderband ausgebildet sein. Die Ausschleuseinrichtung kann beispielsweise als Förderband ausgebildet sein oder ein Förderband umfassen.

Gemäß einer weiteren Ausführungsform umfasst der Corrugator ferner eine Einschleuseinrichtung zum wahlweisen Einschleusen der einzelnen Formbacken aus der zweiten Rücklaufbahn in die erste Rücklaufbahn.

Insbesondere umfasst der Corrugator eine Einschleuseinrichtung zum wahlweisen Einschleusen einzelner erster Formbacken und/oder einzelner zweiter Formbacken aus der zweiten Rücklaufbahn in die erste Rücklaufbahn. Vorzugsweise sind zwei derartige Einschleuseinrichtungen vorgesehen, wobei jeder zweiten Rücklaufbahn eine derartige Einschleuseinrichtung zugeordnet ist. Die Einschleuseinrichtung kann beispielsweise ein Förderband umfassen oder als Förderband ausgebildet sein. Die Einschleuseinrichtung kann beispielsweise als Förderband ausgebildet sein oder ein Förderband umfassen.

Gemäß einer weiteren Ausführungsform weisen die Formbacken jeweils eine Markierung, insbesondere eine RFID-Markierung, auf, wobei der Corrugator eine Erfassungseinrichtung zum Erfassen der Markierung und eine Steuereinrichtung umfasst, die dazu eingerichtet ist, die Ausschleuseinrichtung und/oder die Einschleuseinrichtung so anzusteuern, dass in Abhängigkeit von der erfassten Markierung einzelne Formbacken aus der ersten Rücklaufbahn ausschleusbar und/oder in diese einschleusbar sind.

Bevorzugt weisen die ersten Formbacken und/oder die zweiten Formbacken jeweils eine Markierung, insbesondere eine RFID-Markierung auf, wobei der Corrugator eine Erfassungseinrichtung zum Erfassen der Markierung und eine Steuereinrichtung umfasst, die dazu eingerichtet ist, die Ausschleuseinrichtung und/oder die Einschleuseinrichtung so anzusteuern, dass in Abhängigkeit von der erfassten Markierung einzelne erste Formbacken oder einzelne zweite Formbacken aus der ersten Rücklaufbahn ausschleusbar und/oder in diese einschleusbar sind. RFID (engl.: radio frequency identification) ist eine Technologie für Sender-Empfänger-Systeme zum automatischen und berührungslosen Identifizieren und Lokalisieren von Objekten mit Hilfe von Radiowellen. Die RFID-Markierung kann ein Transponder sein, der an der jeweiligen Formbacke befestigt ist. Mit Hilfe der Steuereinrichtung kann somit die Abfolge der Formbacken entlang der Führungsbahn zur Formgebung des Kunststoffprodukts beliebig variiert werden, ohne dass der Corrugator angehalten werden muss.

Gemäß einer weiteren Ausführungsform ist mit Hilfe der Steuereinrichtung eine Abfolge der Formbacken in Abhängigkeit von der erfassten Markierung im Betrieb des Corrugators durch ein Ausschleusen einzelner Formbacken aus der ersten Rücklaufbahn in die zweite Rücklaufbahn und/oder durch ein Einschleusen einzelner Formbacken aus der zweiten Rücklaufbahn in die erste Rücklaufbahn veränderbar.

Insbesondere ist mit Hilfe der Steuereinrichtung eine Abfolge der ersten Formbacken und der zweiten Formbacken in Abhängigkeit von der erfassten Markierung im Betrieb des Corrugators durch ein Ausschleusen einzelner erster Formbacken und/oder einzelner zweiter Formbacken aus der ersten Rücklaufbahn in die zweite Rücklaufbahn und/oder durch ein Einschleusen einzelner erster Formbacken und/oder einzelner zweiter Formbacken aus der zweiten Rücklaufbahn in die erste Rücklaufbahn veränderbar. Hierdurch kann die Abfolge der Formbacken entlang der Führungsbahn je nach dem gewünschten Produkt im Produktionsbetrieb des Corrugators ohne zusätzlichen Rüstaufwand verändert werden.

Gemäß einer weiteren Ausführungsform umfasst der Corrugator ferner ein Schubfach, wobei die in der zweiten Rücklaufbahn aufgenommenen Formbacken mit Hilfe des Schubfachs aus der zweiten Rücklaufbahn entnehmbar sind.

Vorzugsweise sind mehrere derartige Schubfächer vorgesehen, wobei jeder zweiten Rücklaufbahn ein derartiges Schubfach zugeordnet ist. Ferner kann der Corrugator auch noch zwei dritte Rücklaufbahnen aufweisen, denen ebenfalls ein derartiges Schubfach zugeordnet ist. Mit Hilfe des Schubfachs können im Betrieb des Corrugators die Formbacken schnell und einfach ausgetauscht werden. Ein Austausch einzelner Formbacken ist hierdurch verzichtbar.

Gemäß einer weiteren Ausführungsform umfasst der Corrugator ferner eine dritte bis n-te Rücklaufbahn, mit deren Hilfe im Betrieb des Corrugators die einzelnen Formbacken aus der ersten Rücklaufbahn ausschleusbar und/oder in diese einschleusbar sind.

Insbesondere umfasst der Corrugator eine dritte bis n-te Rücklaufbahn, mit deren Hilfe im Betrieb des Corrugators einzelne erste Formbacken und/oder einzelne zweite Formbacken aus der ersten Rücklaufbahn ausschleusbar und/oder in diese einschleusbar sind. Die Anzahl der Rücklaufbahnen ist beliebig. Insbesondere umfasst der Corrugator zwei dritte Rücklaufbahnen beziehungsweise zwei n-te Rücklaufbahnen. n ist dabei größer gleich vier. Jeder Rücklaufbahn kann dabei ein Typ an Formbacken zugeordnet sein. Alternativ können in jeder Rücklaufbahn auch beliebige unterschiedliche Typen an Formbacken aufgenommen sein.

Gemäß einer weiteren Ausführungsform umfasst der Corrugator ferner eine Vielzahl erster Formbacken, wobei jede erste Formbacke eine erste Kavität aufweist, eine Vielzahl zweiter Formbacken, wobei jede zweite Formbacke eine sich von der ersten Kavität geometrisch unterscheidende zweite Kavität aufweist, wobei die ersten Formbacken und die zweiten Formbacken im Betrieb des Corrugators entlang der Führungsbahn von dem Anfangsbereich hin zu dem Ausgangsbereich jeweils paarweise geführt sind, wobei die ersten Formbacken und die zweiten Formbacken im Betrieb des Corrugators entlang der ersten Rücklaufbahn von dem Ausgangsbereich hin zu dem Anfangsbereich geführt sind, und wobei einzelne erste Formbacken und/oder einzelne zweite Formbacken im Betrieb des Corrugators mit Hilfe der zweiten Rücklaufbahn aus der ersten Rücklaufbahn ausschleusbar und/oder in diese einschleusbar sind.

Die ersten Formbacken können auch als Wellenformbacken und die zweiten Formbacken können auch als Muffenformbacken bezeichnet werden. Die ersten Formbacken sind insbesondere dazu eingerichtet, an das Kunststoffprodukt eine Wellengeometrie anzuformen. Die zweiten Formbacken sind insbesondere dazu eingerichtet, an das Kunststoffprodukt eine Muffengeometrie anzuformen.

Gemäß einer weiteren Ausführungsform umfasst der Corrugator ferner eine Vielzahl dritter bis n-ter Formbacken, wobei jede dritte bis n-te Formbacke eine sich von der ersten Kavität und der zweiten Kavität geometrisch unterscheidende dritte bis n-te Kavität aufweist, wobei mit Hilfe der dritten bis n-ten Rücklaufbahn im Betrieb des Corrugators einzelne erste Formbacken, einzelne zweite Formbacken und/oder einzelne dritte bis n-te Formbacken aus der ersten Rücklaufbahn ausschleusbar und/oder in diese einschleusbar sind.

Die Anzahl der unterschiedlichen Typen an Formbacken ist beliebig. Beispielsweise sind die dritten Formbacken dazu eingerichtet, an dem Kunststoffbauteil einen Glattschlauchbereich anzuformen. Daher können die dritten Formbacken auch als Glattschlauchformbacken bezeichnet werden.

Gemäß einer weiteren Ausführungsform sind die Führungsbahn, die erste Rücklaufbahn und die zweite Rücklaufbahn parallel zueinander angeordnet.

Insbesondere ist eine Bewegungsrichtung, in der die Formbacken entlang der Führungsbahn geführt sind, entgegengesetzt einer Bewegungsrichtung orientiert, entlang welcher die Formbacken entlang der ersten Rücklaufbahn, der zweiten Rücklaufbahn und/oder der dritten Rücklaufbahn geführt sind. Vorzugsweise umfasst der Corrugator auch eine Antriebseinrichtung, die dazu eingerichtet ist, die Formbacken entlang der Führungsbahn zu fördern. Hierzu kann die Antriebseinrichtung beispielsweise ein Ritzel aufweisen, das dazu eingerichtet ist, formschlüssig in eine an den Formbacken vorgesehene Verzahnung einzugreifen.

Gemäß einer weiteren Ausführungsform weist die zweite Rücklaufbahn einen Ausschleusabschnitt und/oder einen Einschleusabschnitt auf, wobei der Ausschleusabschnitt und/oder der Einschleusabschnitt schräg zu der ersten Rücklaufbahn angeordnet sind.

Weiterhin kann auch die dritte Rücklaufbahn einen Ausschleusabschnitt und/oder einen Einschleusabschnitt aufweisen, der jeweils schräg zu der ersten Rücklaufbahn angeordnet ist. Ein Winkel zwischen der ersten Rücklaufbahn und dem Ausschleusabschnitt beziehungsweise zwischen der ersten Rücklaufbahn und dem Einschleusabschnitt kann beispielsweise 10° bis 30° betragen. Der Ausschleusabschnitt und/oder der Einschleusabschnitt kann als Förderband ausgebildet sein oder ein Förderband umfassen.

Ferner wird eine Extrusionsanlage mit einem derartigen Corrugator und einem dem Corrugator vorgeschalteten Extruder vorgeschlagen.

Der Extruder kann einen Spritzkopf aufweisen, der dem Corrugator ein plastifiziertes Kunststoffmaterial zuführt. Mit Hilfe des Corrugators kann ein schlauchförmiges Halbzeug gefertigt werden, das mit Hilfe von Druckluft innenseitig an die Kavität der Formbacken gepresst wird. Der Extruder kann ein Einschneckenextruder oder ein Zweischneckenextruder sein. Der Extruder kann zur Coextrusion geeignet sein. Das heißt, mit Hilfe des Extruders können unterschiedliche Kunststoffmaterialien gleichzeitig verarbeitet werden.

Weiterhin wird ein Verfahren zum Betreiben eines derartigen Corrugators, der eine Vielzahl Formbacken, eine Führungsbahn, zwei erste Rücklaufbahnen und zwei zweite Rücklaufbahnen umfasst, vorgeschlagen, wobei das Verfahren die folgenden Schritte umfasst: Jeweils paarweises Führen der Formbacken entlang der Führungsbahn von einem Anfangsbereich der Führungsbahn hin zu einem Ausgangsbereich der Führungsbahn, Führen der Formbacken von dem Ausgangsbereich hin zu dem Anfangsbereich entlang der ersten Rücklaufbahn, Ausschleusen einzelner Formbacken aus der ersten Rücklaufbahn in die zweite Rücklaufbahn, und/oder Einschleusen einzelner Formbacken aus der zweiten Rücklaufbahn in die erste Rücklaufbahn.

Das Verfahren kann auch das Ausschleusen und/oder Einschleusen einzelner erster Formbacken, zweiter Formbacken und/oder dritter Formbacken aus der zweiten Rücklaufbahn oder der dritten Rücklaufbahn in die erste Rücklaufbahn umfassen. Mit Hilfe des Verfahrens kann im Produktionsbetrieb des Corrugators die Abfolge der Formbacken entlang der Führungsbahn ohne ein Anhalten des Corrugators verändert werden.

Insbesondere wird ein Verfahren zum Betreiben eines Corrugators, der eine Vielzahl erster Formbacken, wobei jede Formbacke eine erste Kavität aufweist, eine Vielzahl zweiter Formbacken, wobei jede zweite Formbacke eine sich von der ersten Kavität geometrisch unterscheidende zweite Kavität aufweist, eine Führungsbahn, eine erste Rücklaufbahn und eine zweite Rücklaufbahn umfasst, vorgeschlagen. Das Verfahren umfasst die folgenden Schritte: Jeweils paarweises Führen der ersten Formbacken und der zweiten Formbacken entlang der Führungsbahn von einem Anfangsbereich der Führungsbahn hin zu einem Ausgangsbereich der Führungsbahn, Führen der ersten Formbacken und der zweiten Formbacken von dem Ausgangsbereich hin zu dem Anfangsbereich entlang der ersten Rücklaufbahn, Ausschleusen einzelner erster Formbacken und/oder einzelner zweiter Formbacken aus der ersten Rücklaufbahn in die zweite Rücklaufbahn und/oder Einschleusen einzelner erster Formbacken und/oder einzelner zweiter Formbacken aus der zweiten Rücklaufbahn in die erste Rücklaufbahn.

Gemäß einer Ausführungsform werden die einzelnen Formbacken so aus der ersten Rücklaufbahn ausgeschleust und/oder so in die erste Rücklaufbahn eingeschleust, dass eine Bewegungsrichtung der einzelnen Formbacken bei dem Ausschleusen und/oder bei dem Einschleusen jeweils schräg in einem Winkel relativ zu einer Bewegungsrichtung der Formbacken entlang der ersten Führungsbahn orientiert ist.

Der Winkel kann beispielsweise 10° bis 30° betragen. Insbesondere ist der Winkel zwischen der Bewegungsrichtung bei dem Ausschleusen und/oder bei dem Einschleusen der einzelnen Formbacken und der Bewegungsrichtung der Formbacken entlang der ersten Rücklaufbahn ungleich 90°. Wie zuvor erwähnt kann der Winkel als erster Winkel bezeichnet werden.

Gemäß einer weiteren Ausführungsform wird jeweils eine Markierung, insbesondere eine RFID-Markierung, der Formbacken mit Hilfe einer Erfassungseinrichtung erfasst, wobei mit Hilfe einer Steuereinrichtung eine Ausschleuseinrichtung und/oder eine Einschleuseinrichtung so angesteuert wird, dass in Abhängigkeit von der erfassten Markierung die einzelnen Formbacken aus der ersten Rücklaufbahn ausgeschleust und/oder in diese eingeschleust werden.

Bevorzugt wird jeweils eine Markierung, insbesondere eine RFID-Markierung, der ersten Formbacken und/oder der zweiten Formbacken mit Hilfe einer Erfassungseinrichtung erfasst, wobei mit Hilfe einer Steuereinrichtung eine Ausschleuseinrichtung und/oder eine Einschleuseinrichtung so angesteuert wird, dass in Abhängigkeit von der erfassten Markierung einzelne erste Formbacken und/oder einzelne zweite Formbacken aus der ersten Rücklaufbahn ausgeschleust und/oder in diese eingeschleust werden. Vorzugsweise weist jede Formbacke eine eigene RFID-Markierung auf. Mit Hilfe der RFID-Markierung können der Typ und die Position der jeweiligen Formbacke berührungslos und auch in Bewegung erfasst werden.

Gemäß einer weiteren Ausführungsform wird mit Hilfe der Steuereinrichtung eine Abfolge der Formbacken in Abhängigkeit von der erfassten Markierung durch ein Ausschleusen einzelner Formbacken aus der ersten Rücklaufbahn in die zweite Rücklaufbahn und/oder durch ein Einschleusen einzelner Formbacken aus der zweiten Rücklaufbahn in die erste Rücklaufbahn verändert.

Insbesondere wird mit Hilfe der Steuereinrichtung eine Abfolge der ersten Formbacken und der zweiten Formbacken in Abhängigkeit von der erfassten Markierung durch ein Ausschleusen einzelner erster Formbacken und/oder einzelner zweiter Formbacken aus der ersten Rücklaufbahn in die zweite Rücklaufbahn und/oder durch ein Einschleusen einzelner erster Formbacken und/oder einzelner zweiter Formbacken aus der zweiten Rücklaufbahn in die erste Rücklaufbahn verändert. Hierdurch kann die Geometrie des hergestellten Kunststoffprodukts im laufenden Produktionsbetrieb des Corrugators verändert werden. Dadurch können unterschiedliche Kunststoffprodukte ohne einen hohen Rüstaufwand mit Hilfe des Corrugators hergestellt werden.

Gemäß einer weiteren Ausführungsform werden die Formbacken entlang der Führungsbahn, der ersten Rücklaufbahn und der zweiten Rücklaufbahn parallel zueinander geführt.

Insbesondere werden auch die Formbacken entlang der dritten Rücklaufbahn parallel zu der Führungsbahn, der ersten Rücklaufbahn und der zweiten Rücklaufbahn geführt. Eine Bewegungsrichtung der Formbacken entlang der Führungsbahn ist entgegengesetzt einer Bewegungsrichtung der Formbacken entlang der ersten Rücklaufbahn, der zweiten Rücklaufbahn und/oder der dritten Rücklaufbahn orientiert.

Die für den Corrugator beschriebenen Merkmale gelten für das Verfahren entsprechend und umgekehrt.

Weitere mögliche Implementierungen des Corrugators, der Extrusionsanlage und/oder des Verfahrens umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Corrugators, der Extrusionsanlage und/oder des Verfahrens hinzufügen.

Weitere vorteilhafte Ausgestaltungen und Aspekte des Corrugators, der Extrusionsanlage und/oder des Verfahrens sind Gegenstand der Unteransprüche sowie der im Folgenden beschriebenen Ausführungsbeispiele des Corrugators, der Extrusionsanlage und/oder des Verfahrens. Im Weiteren werden der Corrugator, die Extrusionsanlage und/oder das Verfahren anhand von bevorzugten Ausführungsformen unter Bezugnahme auf die beigelegten Figuren näher erläutert.
- Fig. 1: zeigt eine schematische Aufsicht einer Ausführungsform einer Extrusionsanlage;
- Fig. 2: zeigt eine schematische Seitenansicht der Extrusionsanlage gemäß Fig. 1;
- Fig. 3: zeigt eine schematische Aufsicht einer Ausführungsform von Formbacken für einen Corrugator der Extrusionsanlage gemäß Fig. 1;
- Fig. 4: zeigt eine schematische Aufsicht einer weiteren Ausführungsform von Formbacken für den Corrugator der Extrusionsanlage gemäß Fig. 1;
- Fig. 5: zeigt eine schematische Aufsicht einer weiteren Ausführungsform von Formbacken für den Corrugator der Extrusionsanlage gemäß Fig. 1; und
- Fig. 6: zeigt ein schematisches Blockdiagramm einer Ausführungsform eines Verfahrens zum Betreiben des Corrugators für die Extrusionsanlage gemäß Fig. 1.

In den Figuren sind gleiche oder funktionsgleiche Elemente mit denselben Bezugszeichen versehen worden, sofern nichts anderes angegeben ist.

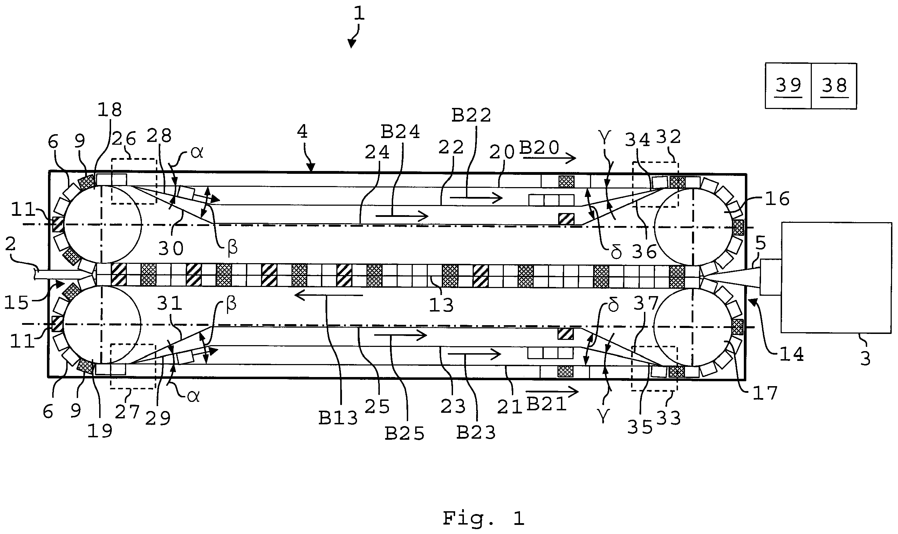

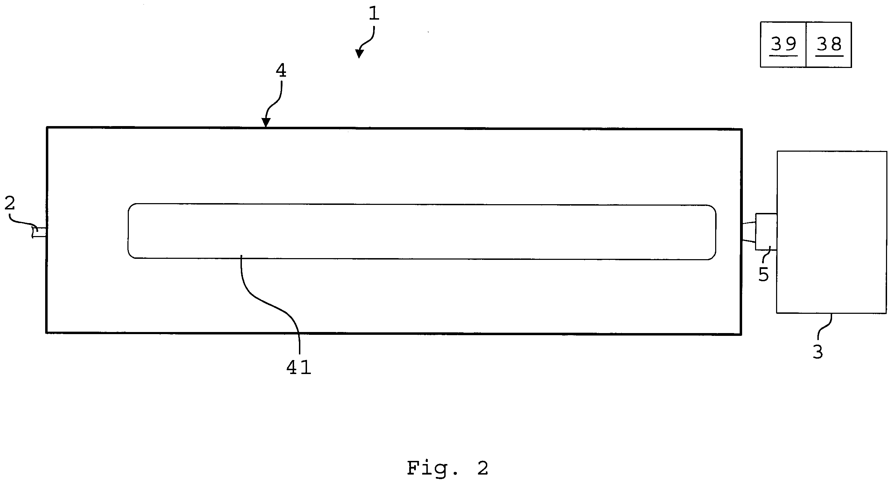

Die Fig. 1 zeigt eine schematische Aufsicht einer Extrusionsanlage 1. Die Fig. 2 zeigt eine schematische Seitenansicht der Extrusionsanlage 1. Im Folgenden wird auf die Fig. 1 und 2 gleichzeitig Bezug genommen.

Die Extrusionsanlage 1 ist zur Herstellung eines schlauchförmigen Kunststoffprodukts 2 geeignet. Das Kunststoffprodukt 2 ist ein Wellschlauch oder ein Wellrohr. Ein Wellschlauch unterscheidet sich vom ebenfalls axial flexiblen Wellrohr durch die Elastizität in radialer und längs aussehender Richtung. Diese ist bedingt durch das Material, sie kann aber auch durch die Formgebung der Wellung noch unterstützt werden. Wellschläuche sind sowohl Schutzrohr für die eigentlichen Nutzungsträger, wie Kabelrohre oder dergleichen, als auch selbst Transporteur von Flüssigkeiten und Gasen.

Das Kunststoffprodukt 2 wird mit Hilfe der Extrusionsanlage 1 als Endlosprodukt gefertigt und mit Hilfe einer der Extrusionsanlage 1 nachgeschalteten Schneideinrichtung auf die gewünschte Länge abgelängt. Die Extrusionsanlage 1 umfasst einen Extruder 3 zum Plastifizieren von Kunststoffmaterial sowie einen Corrugator 4. Der Extruder 3 kann ein Einschneckenextruder oder ein Zweischneckenextruder sein. Der Extruder 3 kann zur Coextrusion geeignet sein. Das heißt, mit Hilfe des Extruders 3 können unterschiedliche Kunststoffmaterialien gleichzeitig verarbeitet werden.

Der Corrugator 4 ist geeignet, dem schlauchförmigen Kunststoffprodukt 2 eine gewünschte Geometrie, insbesondere eine Außengeometrie, zu geben. Der Extruder 3 umfasst einen Spritzkopf 5, der dem Corrugator 4 das aufgeschmolzene Kunststoffmaterial zuführt. Der Corrugator 4 ist stromabwärts des Spritzkopfs 5 positioniert.

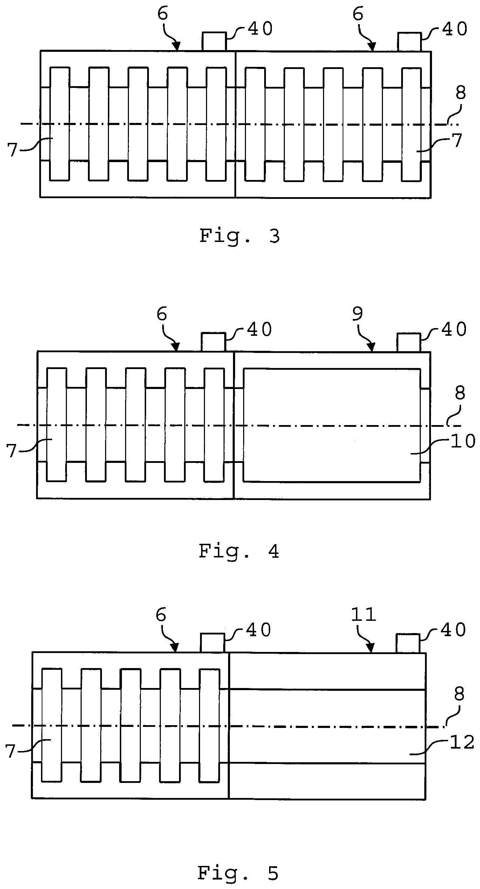

Weiterhin umfasst der Corrugator 4 eine Vielzahl erster Formbacken 6 (Fig. 3). Jede erste Formbacke 6 weist einen ersten Hohlraum oder eine erste Kavität 7 auf. Die erste Kavität 7 kann eine wellenförmige Geometrie aufweisen. Mit Hilfe der ersten Kavität 7 kann die Geometrie des Kunststoffprodukts 2 geformt werden. Da die erste Kavität 7 wellenförmig ist, können die ersten Formbacken 6 auch als Wellenformbacken bezeichnet werden. Die erste Kavität 7 ist rotationssymmetrisch zu einer Symmetrie- oder Mittelachse 8 ausgebildet, wobei die erste Kavität 7 einen Umfangswinkel von 180° aufweist. Das heißt, jeweils ein Paar erster Formbacken 6 bilden einen umfänglich geschlossenen und rotationssymmetrisch zu der Mittelachse 8 angeordneten Hohlraum aus, der durch zwei erste Kavitäten 7 gebildet wird. Insbesondere bildet jede erste Formbacke 6 eine Halbschale aus.

Der Corrugator 4 umfasst ferner eine Vielzahl zweiter Formbacken 9 (Fig. 4) mit einer zweiten Kavität 10. Die zweite Kavität 10 unterscheidet sich geometrisch von der ersten Kavität 7. Die zweite Kavität 10 kann, wie in der Fig. 4 gezeigt, keine gewellte, sondern eine glatte Geometrie aufweisen. Beispielsweise kann mit Hilfe der zweiten Kavität 10 an das Kunststoffprodukt 2 eine Muffe angeformt werden. Daher kann die zweite Formbacke 9 auch als Muffenformbacke bezeichnet werden. Die zweite Kavität 10 ist ebenfalls rotationssymmetrisch zu der Mittelachse 8 ausgebildet und kann einen Umfangswinkel von 180° aufweisen. Ein Paar an zweiten Formbacken 9 bildet einen umfänglich geschlossenen Hohlraum aus, der durch zwei zweite Kavitäten 10 gebildet wird und der rotationssymmetrisch zu der Mittelachse 8 ausgebildet ist.

Weiterhin kann der Corrugator 4 eine beliebige Anzahl an dritten Formbacken 11 (Fig. 5) aufweisen. Die dritten Formbacken 11 umfassen jeweils eine dritte Kavität 12, deren Geometrie sich von der Geometrie der ersten Kavität 7 und von der Geometrie der zweiten Kavität 10 unterscheidet. Beispielsweise kann mit Hilfe der dritten Kavität 12 an das Kunststoffprodukt 2 ein Glattschlauchbereich angeformt werden. Daher können die dritten Formbacken 11 auch als Glattschlauchformbacken bezeichnet werden. Die dritte Kavität 12 ist ebenfalls rotationssymmetrisch zu der Mittelachse 8 ausgebildet und weist einen Umfangswinkel von 180° auf, wobei ein Paar dritter Formbacken 11 einen umfänglich geschlossenen Hohlraum ausbildet, der mit Hilfe zweier dritter Kavitäten 12 gebildet ist.

Der Corrugator 4 kann eine beliebige Anzahl an unterschiedlichen Typen an Formbacken 6, 9, 11 aufweisen. Beispielsweise kann der Corrugator 4 auch vier, fünf oder mehr unterschiedliche Typen an Formbacken 6, 9, 11 aufweisen. Die Formbacken 6, 9, 11 sind vorzugsweise aus einem Metallwerkstoff, insbesondere aus einer Aluminiumlegierung, gefertigt. Die Formbacken 6, 9, 11 können gekühlt, insbesondere luftgekühlt, ölgekühlt oder wassergekühlt, sein. Hierzu können in den Formbacken 6, 9, 11 Kühlkanäle vorgesehen sein.

Nun zurückkehrend zu der Fig. 1 umfasst der Corrugator 4 eine Führungsbahn 13, entlang welcher die Formbacken 6, 9, 11 im Betrieb des Corrugators 4 geführt sind. Die Formbacken 6, 9, 11 sind in der Fig. 1 als ungefüllte beziehungsweise unterschiedlich gefüllte Kästchen dargestellt. Die Formbacken 6, 9, 11 bewegen sich entlang der Führungsbahn 13 in einer ersten Bewegungsrichtung B13 von einem Anfangsbereich 14 hin zu einem Ausgangsbereich 15 der Führungsbahn 13. Entlang der Führungsbahn 13 sind im Betrieb des Corrugators 4 die Formbacken 6, 9, 11 jeweils paarweise geführt. Das heißt, es bilden immer zwei erste Formbacken 6, zwei zweite Formbacken 9 oder zwei dritte Formbacken 11 ein Formbackenpaar. Hierzu werden in dem Anfangsbereich 14 die Formbacken 6, 9, 11 jeweils paarweise zusammengeführt. Das heißt, im Anfangsbereich 14 wird jeweils einer der ersten Formbacken 6 eine weitere erste Formbacke 6, einer der zweiten Formbacken 9, eine weitere zweite Formbacke 9 und einer der dritten Formbacken 11 eine weitere dritte Formbacke 11 zugeordnet.

In dem Anfangsbereich 14 wird mit Hilfe des Spritzkopfs 5 das aufgeschmolzene Kunststoffmaterial zwischen die Formbacken 6, 9, 11 als endloser Schlauch eindosiert und beispielsweise mit Hilfe von Druckluft innenseitig gegen die jeweilige Kavität 7, 10, 12 zur Formgebung des Kunststoffprodukts 2 gedrückt. Am Ausgangsbereich 15 der Führungsbahn 13 werden die Paare an Formbacken 6, 9, 11 jeweils wieder voneinander getrennt. Die Führungsbahn 13 kann eine Führungsschiene, ein Förderband oder eine beliebige Fördereinrichtung sein, die dazu eingerichtet ist, die Formbacken 6, 9, 11 in der ersten Bewegungsrichtung B13 von dem Anfangsbereich 14 hin zu dem Ausgangsbereich 15 zu transportieren.

An dem Anfangsbereich 14 sind zwei erste Umlenkeinrichtungen 16, 17 vorgesehen. Die ersten Umlenkeinrichtungen 16, 17 können beispielsweise als Zahnräder, Rollen, Führungsschienen oder dergleichen ausgebildet sein. Weiterhin sind an dem Ausgangsbereich 15 zwei zweite Umlenkeinrichtungen 18, 19 vorgesehen. Zum Transport der Formbacken 6, 9, 11 entlang der Führungsbahn 13 kann eine Antriebseinrichtung vorgesehen sein. Die Antriebseinrichtung kann beispielsweise ein Ritzel sein, das in eine an den Formbacken 6, 9, 11 vorgesehene Verzahnung formschlüssig eingreift. Mit Hilfe der Antriebseinrichtung werden die Formbacken 6, 9, 11 dann entlang der ersten Führungsbahn 13 in der ersten Bewegungsrichtung B13 gefördert.

Der Corrugator 4 umfasst weiterhin zwei erste Rücklaufbahnen 20, 21, entlang welcher die Formbacken 6, 9, 11 im Betrieb des Corrugators 4 von dem Ausgangsbereich 15 hin zu dem Anfangsbereich 14 geführt sind. Eine jeweilige Bewegungsrichtung B20, B21 der Formbacken 6, 9, 11 entlang der ersten Rücklaufbahnen 20, 21 ist dabei entgegengesetzt zu der ersten Bewegungsrichtung B13 orientiert. Die ersten Rücklaufbahnen 20, 21 und die Führungsbahn 13 sind parallel zueinander angeordnet. Im Betrieb des Corrugators 4 sind, abweichend von der Darstellung in der Fig. 1, beide erste Rücklaufbahnen 20, 21 vollständig mit einander berührenden Formbacken 6, 9, 11 aufgefüllt, so dass mit Hilfe der der Führungsbahn 13 zugeordneten Antriebseinrichtung die Formbacken 6, 9, 11 entlang der ersten Rücklaufbahnen 20, 21 gefördert werden können.

Der Corrugator 4 umfasst weiterhin zwei zweite Rücklaufbahnen 22, 23. Die beiden zweiten Rücklaufbahnen 22, 23 sind parallel zu der Führungsbahn 13 und zu den beiden ersten Rücklaufbahnen 20, 21 angeordnet. Eine jeweilige Bewegungsrichtung B22, B23 ist entgegengesetzt der ersten Bewegungsrichtung B13 orientiert. Der Corrugator 4 kann weiterhin zwei dritte Rücklaufbahnen 24, 25 aufweisen. Die Anzahl der Rücklaufbahnen 20 bis 25 ist beliebig. Eine jeweilige Bewegungsrichtung B24, B25 ist entgegengesetzt der ersten Bewegungsrichtung B13 orientiert. Der Corrugator 4 weist jedoch zumindest die beiden ersten Rücklaufbahnen 20, 21 und die beiden zweiten Rücklaufbahnen 22, 23 auf.

Mit Hilfe der zweiten Rücklaufbahnen 22, 23 und der dritten Rücklaufbahnen 24, 25 können einzelne Formbacken 6, 9, 11 im Betrieb des Corrugators 4 aus der jeweiligen ersten Rücklaufbahn 20, 21 ausgeschleust werden oder in diese eingeschleust werden. Unter "Ausschleusen" beziehungsweise "Einschleusen" ist vorliegend zu verstehen, dass mit Hilfe der zweiten Rücklaufbahnen 22, 23 und/oder der dritten Rücklaufbahnen 24, 25 einzelne Formbacken 6, 9, 11 aus der ersten Rücklaufbahn 20, 21 entnehmbar beziehungsweise in diese einfügbar sind. Dieses Ausschleusen und Einschleusen kann dabei erfolgen ohne dass der Transport der Formbacken 6, 9, 11 entlang der Führungsbahn 13 unterbrochen werden muss.

Die zweiten Rücklaufbahnen 22, 23 und die dritten Rücklaufbahnen 24, 25 sind beispielsweise als Förderbänder ausgebildet, die dazu eingerichtet sind, die jeweiligen Formbacken 6, 9, 11 in den entsprechenden Bewegungsrichtungen B22 bis B25 zu fördern. Die Bewegungsrichtungen B22 bis B25 sind dabei parallel zu der ersten Bewegungsrichtung B13 und entgegengesetzt zu dieser orientiert.

Zum Ausschleusen der Formbacken 6, 9, 11 aus der jeweiligen ersten Rücklaufbahn 20, 21 kann jeweils eine Ausschleuseinrichtung 26, 27 vorgesehen sein. Jeder Ausschleuseinrichtung 26, 27 ist ein Ausschleusabschnitt 28, 29 zugeordnet, mit dessen Hilfe die jeweiligen ausgeschleusten Formbacken 6, 9, 11 der jeweiligen zweiten Rücklaufbahn 22, 23 zugeführt werden. Die Ausschleusabschnitte 28, 29 sind jeweils in einem Winkel α zu der jeweiligen ersten Rücklaufbahn 20, 21 geneigt. Die Ausschleuseinrichtungen 26, 27 umfassen weiterhin Ausschleusabschnitte 30, 31 zum Zuführen der ausgeschleusten Formbacken 6, 9, 11 zu den dritten Rücklaufbahnen 24, 25. Die Ausschleusabschnitte 30, 31 sind jeweils in einem Winkel ß zu der ersten Rücklaufbahn 20, 21 geneigt. Der Winkel ß kann dabei größer als der Winkel α sein. Beispielsweise kann der Winkel α 10° bis 20° und der Winkel β 20° bis 30° betragen.

Der Corrugator 4 umfasst weiterhin zwei Einschleuseinrichtungen 32, 33 zum wahlweisen Einschleusen einzelner Formbacken 6, 9, 11 aus den zweiten Rücklaufbahnen 22, 23 und/oder den dritten Rücklaufbahnen 24, 25 in die ersten Rücklaufbahnen 20, 21. Die Einschleuseinrichtungen 32, 33 umfassen jeweils Einschleusabschnitte 34, 35 zum Zuführen der einzelnen Formbacken 6, 9, 11 von den zweiten Rücklaufbahnen 22, 23 zu den ersten Rücklaufbahnen 20, 21. Die Einschleusabschnitte 34, 35 sind jeweils in einem Winkel γ relativ zu den ersten Rücklaufbahnen 20, 21 geneigt. Der Winkel γ kann gleich dem Winkel α sein. Die Winkel α, γ können als erste Winkel bezeichnet werden. Weiterhin umfassen die Einschleuseinrichtungen 32, 33 Einschleusabschnitte 36, 37 zum Zuführen der Formbacken 6, 9, 11 von den dritten Rücklaufbahnen 24, 25 zu den ersten Rücklaufbahnen 20, 21. Die Einschleusabschnitte 36, 37 sind jeweils in einem Winkel δ relativ zu den ersten Rücklaufbahnen 20, 21 geneigt. Der Winkel δ kann gleich dem Winkel β sein. Die Winkel β, δ können als zweite Winkel bezeichnet werden.

Der Corrugator 4 umfasst weiterhin eine Steuereinrichtung 38 sowie eine Erfassungseinrichtung 39. Mit Hilfe der Erfassungseinrichtung 39 kann der Formbackentyp ermittelt werden. Das heißt, mit Hilfe der Erfassungseinrichtung 39 kann erfasst werden, welcher Typ an Formbacken 6, 9, 11 sich wo in der Führungsbahn 13 beziehungsweise in den Rücklaufbahnen 20 bis 25 befindet. Hierzu kann jede Formbacke 6, 9, 11 eine Markierung 40 (Fig. 3 bis 5), insbesondere eine RFID-Markierung, aufweisen.

Die Funktionalität des Corrugators 4 wird nachfolgend erläutert. Im Betrieb des Corrugators 4 werden in dem Anfangsbereich 14 der ersten Führungsbahn 13 die Formbacken 6, 9, 11 mit Hilfe der Umlenkeinrichtungen 16, 17 paarweise zusammengeführt, wobei das plastifizierte Kunststoffmaterial in Form eines Glattschlauchs mit Hilfe des Spritzkopfs 5 zwischen die sich schließenden Formbacken 6, 9, 11 eindosiert wird. Mit Hilfe von Druckluft wird das plastifizierte Kunststoffmaterial gegen die Innenwände der Kavitäten 7, 10, 12 gepresst, wodurch das Kunststoffprodukt 2 die gewünschte Geometrie erhält.

Beim Transport der Formbacken 6, 9, 11 entlang der ersten Führungsbahn 13 in der ersten Bewegungsrichtung B13 kühlt das Kunststoffmaterial ab, bis es am Ausgangsbereich 15 der Führungsbahn 13 so weit abgekühlt ist, dass das Kunststoffprodukt 2 entformt werden kann. Hierzu werden mit Hilfe der Umlenkeinrichtungen 18, 19 die paarweise angeordneten Formbacken 6, 9, 11 in dem Ausgangsbereich 15 wieder voneinander getrennt und der jeweiligen ersten Rücklaufbahn 20, 21 zugeordnet, entlang welcher die Formbacken 6, 9, 11 in der Bewegungsrichtung B20, B21 dem Anfangsbereich 14 der Führungsbahn 13 wieder zugeführt werden.

Die gewünschte Geometrie des fertigen Kunststoffprodukts 2 wird mit Hilfe einer entsprechenden Abfolge der Formbacken 6, 9, 11 bestimmt. Beispielsweise folgen auf ein Paar zweiter Formbacken 9 zwei Paare an ersten Formbacken 6, ein Paar an dritten Formbacken 11 und ein Paar an ersten Formbacken 6. Die Abfolge der Formbacken 6, 9, 11 ist dabei beliebig.

Soll nun im Betrieb des Corrugators 4 die Abfolge der Formbacken 6, 9, 11 in der Führungsbahn 13 geändert werden, so können mit Hilfe der zweiten Rücklaufbahn 22, 23, insbesondere mit Hilfe der jeweiligen Ausschleuseinrichtung 26, 27 einzelne Formbacken 6, 9, 11 aus der ersten Rücklaufbahn 20, 21 ausgeschleust werden. Hierdurch ändert sich die Abfolge der Formbacken 6, 9, 11, wodurch das Kunststoffprodukt 2 im Betrieb des Corrugators 4 seine Geometrie ändern kann.

Sollen nun zusätzliche Formbacken 6, 9, 11 in die erste Rücklaufbahn 20, 21 eingeschleust werden, so werden mit Hilfe der zweiten Rücklaufbahnen 22, 23 und insbesondere der Einschleuseinrichtungen 32, 33 wahlweise ausgewählte Formbacken 6, 9, 11 der ersten Rücklaufbahn 20, 21 zugeführt, wodurch sich die Abfolge der Formbacken 6, 9, 11 entlang der Führungsbahn 13 verändert. Analoges gilt für die dritten Rücklaufbahnen 24, 25. Die Paare an Rücklaufbahnen 20, 21, 22, 23 und 24, 25 arbeiten dabei immer synchron, so dass in dem Anfangsbereich 14 immer die passenden Paare an Formbacken 6, 9, 11 zusammengeführt werden.

Zum Erfassen des Typs der Formbacken 6, 9, 11 weisen diese die zuvor schon erwähnte Markierungen 40 auf, die mit Hilfe der Erfassungseinrichtung 39 erfasst werden. Der Corrugator 4 kann dabei mehrere Erfassungseinrichtungen 39 aufweisen. Beispielsweise ist die Erfassungseinrichtung 39 beziehungsweise sind die Erfassungseinrichtungen 39 den Ausschleuseinrichtungen 26, 27 und/oder den Einschleuseinrichtungen 32, 33 zugeordnet. Die Steuereinrichtung 38 ist dazu eingerichtet, die Ausschleuseinrichtung 26, 27 und/oder die Einschleuseinrichtung 32, 33 so anzusteuern, dass in Abhängigkeit von der erfassten Markierung 40 einzelne Formbacken 6, 9, 11 aus der ersten Rücklaufbahn 20, 21 ausgeschleust oder in diese eingeschleust werden.

Wie die Fig. 2 zeigt, kann der Corrugator 4 ein Schubfach 41 aufweisen, mit dessen Hilfe alle in einer der Rücklaufbahnen 22 bis 25 aufgenommenen Formbacken 6, 9, 11 entnehmbar sind. Hierdurch kann im Betrieb des Corrugators 4 ein Wechsel der Formbacken 6, 9, 11 vorgenommen werden. Der Corrugator 4 kann mehrere derartige Schubfächer 41 aufweisen.

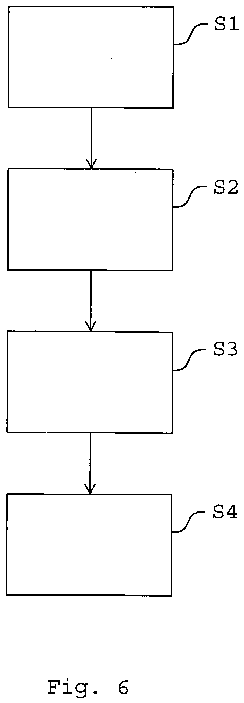

Die Fig. 6 zeigt schematisch ein Blockdiagramm einer Ausführungsform eines Verfahrens zum Betreiben des Corrugators 4. In einem Schritt S1 werden die Formbacken 6, 9, 11 jeweils paarweise entlang der Führungsbahn 13 von dem Anfangsbereich 14 hin zu dem Ausgangsbereich 15 geführt. Hierbei wird dem Kunststoffprodukt 2 die gewünschte Geometrie gegeben.

In einem Schritt S2 werden die Formbacken 6, 9, 11 entlang der ersten Rücklaufbahnen 20, 21 von dem Ausgangsbereich 15 hin zu dem Anfangsbereich 14 geführt. In einem Schritt S3 werden einzelne Formbacken 6, 9, 11 aus der ersten Rücklaufbahn 20, 22 in eine der Rücklaufbahnen 22 bis 25 ausgeschleust. Alternativ oder zusätzlich können in einem Schritt S4 einzelne Formbacken 6, 9, 11 aus einer der Rücklaufbahnen 22 bis 25 in die ersten Rücklaufbahnen 20, 21 eingeschleust werden.

In jedem der Schritte S1 bis S4 können die Markierungen 40 mit Hilfe der Erfassungseinrichtung 39 erfasst werden, wobei mit Hilfe der Steuereinrichtung 38 die jeweilige Ausschleuseinrichtung 26, 27 und/oder die jeweilige Einschleuseinrichtung 32, 33 derart angesteuert wird, dass in Abhängigkeit von der erfassten Markierung 40 einzelne Formbacken 6, 9, 11 aus der ersten Rücklaufbahn 20, 21 ausgeschleust und/oder in diese eingeschleust werden.

Die Abfolge der Formbacken 6, 9, 11 in Abhängigkeit von der erfassten Markierung 40 wird somit durch ein Ausschleusen oder Einschleusen einzelner Formbacken 6, 9, 11 aus einer der Rücklaufbahnen 22 bis 25 in die erste Rücklaufbahn 20, 21 verändert.

Der zuvor beschriebene Corrugator 4 und das zuvor beschriebene Verfahren weisen die folgenden Vorteile auf. Zum Wechsel der Formbacken 6, 9, 11 beziehungsweise zum Wechsel der Abfolge der Formbacken 6, 9, 11 entlang der Führungsbahn 13 ist ein Anhalten der Extrusionsanlage 1 verzichtbar. Insbesondere können auch Kunststoffprodukte 2 unterschiedlicher Länge und unterschiedlicher Geometrie ohne ein Anhalten der Extrusionsanlage 1 zum Umrüsten derselben produziert werden. Hierdurch entstehen ein deutlich geringerer Rüstaufwand und weniger Anfahrausschuss.

Da die Geometrie des Kunststoffprodukts 2 beliebig verändert werden kann, können auch kleine Mengen desselben schnell und problemlos hergestellt werden, dadurch ergibt sich ein reduzierter Lagerhaltungsaufwand. Durch eine integrierte Steuerung kann eine automatische Teilesortierung nach dem Ablängen des Kunststoffprodukts 2 erfolgen. Durch die automatische Zusammenstellung der Formbacken 6, 9, 11 ergeben sich weniger Fehlerquellen. Der Austausch der Formbacken 6, 9, 11 ist im Betrieb der Extrusionsanlage 1 mit Hilfe des Schubfachs 41 problemlos möglich.

### BEZUGSZEICHENLISTE

- 1: Extrusionsanlage
- 2: Kunststoffprodukt
- 3: Extruder
- 4: Corrugator
- 5: Spritzkopf
- 6: Formbacke
- 7: Kavität
- 8: Mittelachse
- 9: Formbacke
- 10: Kavität
- 11: Formbacke
- 12: Kavität
- 13: Führungsbahn
- 14: Anfangsbereich
- 15: Ausgangsbereich
- 16: Umlenkeinrichtung
- 17: Umlenkeinrichtung
- 18: Umlenkeinrichtung
- 19: Umlenkeinrichtung
- 20: Rücklaufbahn
- 21: Rücklaufbahn
- 22: Rücklaufbahn
- 23: Rücklaufbahn
- 24: Rücklaufbahn
- 25: Rücklaufbahn
- 26: Ausschleuseinrichtung
- 27: Ausschleuseinrichtung
- 28: Ausschleusabschnitt
- 29: Ausschleusabschnitt
- 30: Ausschleusabschnitt
- 31: Ausschleusabschnitt
- 32: Einschleuseinrichtung
- 33: Einschleuseinrichtung
- 34: Einschleusabschnitt
- 35: Einschleusabschnitt
- 36: Einschleusabschnitt
- 37: Einschleusabschnitt
- 38: Steuereinrichtung
- 39: Erfassungseinrichtung
- 40: Markierung
- 41: Schubfach

- B13: Bewegungsrichtung
- B21: Bewegungsrichtung
- B22: Bewegungsrichtung
- B23: Bewegungsrichtung
- B24: Bewegungsrichtung
- B25: Bewegungsrichtung
- S1: Schritt
- S2: Schritt
- S3: Schritt
- S4: Schritt
- α: Winkel
- β: Winkel
- γ: Winkel
- δ: Winkel

## Patentansprüche

1. Corrugator (4) für eine Extrusionsanlage (1) zur Formgebung eines schlauchförmigen Kunststoffprodukts (2), mit
einer Vielzahl Formbacken (6, 9, 11),
einer Führungsbahn (13), entlang welcher die Formbacken (6, 9, 11) im Betrieb des Corrugators (4) von einem Anfangsbereich (14) der Führungsbahn (13) hin zu einem Ausgangsbereich (15) der Führungsbahn (13) jeweils paarweise geführt sind,
zwei ersten Rücklaufbahnen (20, 21), welche beidseits der Führungsbahn (13) angeordnet sind und entlang welcher die Formbacken (6, 9, 11) im Betrieb des Corrugators (4) von dem Ausgangsbereich (15) hin zu dem Anfangsbereich (14) geführt sind, und
zwei zweiten Rücklaufbahnen (22, 23), welche ebenfalls beidseits der Führungsbahn (13) angeordnet sind und mit deren Hilfe im Betrieb des Corrugators (4) einzelne Formbacken (6, 9, 11) aus der ersten Rücklaufbahn (20, 21) ausschleusbar und/oder in diese einschleusbar sind,
**dadurch gekennzeichnet, dass**
die zweiten Rücklaufbahnen (22, 23) zwischen der Führungsbahn (13) und den ersten Rücklaufbahnen (20, 21) angeordnet sind.

2. Corrugator nach Anspruch 1, wobei eine Bewegungsrichtung der einzelnen Formbacken (6, 9, 11) bei einem Ausschleusen derselben aus der ersten Rücklaufbahn (20, 21) und/oder bei einem Einschleusen derselben in die erste Rücklaufbahn (20, 21) jeweils schräg in einem Winkel (α, y) relativ zu einer Bewegungsrichtung (B20, B21) der Formbacken (6, 9, 11) entlang der ersten Rücklaufbahn (20, 21) orientiert ist.

3. Corrugator nach Anspruch 1 oder 2, ferner umfassend eine erste Umlenkeinrichtung (16, 17) zum Umlenken der Formbacken (6, 9, 11) von der ersten Rücklaufbahn (20, 21) in die Führungsbahn (13) und eine zweite Umlenkeinrichtung (18, 19) zum Umlenken der Formbacken (6, 9, 11) von der Führungsbahn (13) in die erste Rücklaufbahn (20, 21), wobei sich die Formbacken (6, 9, 11) im Betrieb des Corrugators (4) kontinuierlich entlang der Führungsbahn (13) und der ersten Rücklaufbahn (20, 21) bewegen.

4. Corrugator nach einem der Ansprüche 1 - 3, ferner umfassend eine Ausschleuseinrichtung (26, 27) zum wahlweisen Ausschleusen der einzelnen Formbacken (6, 9, 11) aus der ersten Rücklaufbahn (20, 21) in die zweite Rücklaufbahn (22, 23).

5. Corrugator nach einem der Ansprüche 1 - 4, ferner umfassend eine Einschleuseinrichtung (32, 33) zum wahlweisen Einschleusen der einzelnen Formbacken (6, 9, 11) aus der zweiten Rücklaufbahn (22, 23) in die erste Rücklaufbahn (20, 21).

6. Corrugator nach Anspruch 5, wobei die Formbacken (6, 9, 11) jeweils eine Markierung (40), insbesondere eine RFID-Markierung, aufweisen, wobei der Corrugator (4) eine Erfassungseinrichtung (39) zum Erfassen der Markierung (40) und eine Steuereinrichtung (38) umfasst, die dazu eingerichtet ist, die Ausschleuseinrichtung (26, 27) und/oder die Einschleuseinrichtung (32, 33) so anzusteuern, dass in Abhängigkeit von der erfassten Markierung (40) die einzelnen Formbacken (6, 9, 11) aus der ersten Rücklaufbahn (20, 21) ausschleusbar und/oder in diese einschleusbar sind.

7. Corrugator nach einem der Ansprüche 1 - 6, ferner umfassend eine dritte bis n-te Rücklaufbahn (24, 25), mit deren Hilfe im Betrieb des Corrugators (4) die einzelnen Formbacken (6, 9, 11) aus der ersten Rücklaufbahn (20, 21) ausschleusbar und/oder in diese einschleusbar sind.

8. Corrugator nach einem der Ansprüche 1 - 7, ferner umfassend eine Vielzahl erster Formbacken (6), wobei jede erste Formbacke (6) eine erste Kavität (7) aufweist, eine Vielzahl zweiter Formbacken (9), wobei jede zweite Formbacke (9) eine sich von der ersten Kavität (7) geometrisch unterscheidende zweite Kavität (10) aufweist, wobei die ersten Formbacken (6) und die zweiten Formbacken (9) im Betrieb des Corrugators (4) entlang der Führungsbahn (13) von dem Anfangsbereich (14) hin zu dem Ausgangsbereich (15) jeweils paarweise geführt sind, wobei die ersten Formbacken (6) und die zweiten Formbacken (9) im Betrieb des Corrugators (4) entlang der ersten Rücklaufbahn (20, 21) von dem Ausgangsbereich (15) hin zu dem Anfangsbereich (14) geführt sind, und wobei einzelne erste Formbacken (6) und/oder einzelne zweite Formbacken (9) im Betrieb des Corrugators (4) mit Hilfe der zweiten Rücklaufbahn (22, 23) aus der ersten Rücklaufbahn (20, 21) ausschleusbar und/oder in diese einschleusbar sind.

9. Corrugator nach Anspruch 7 und 8, ferner umfassend eine Vielzahl dritter bis n-ter Formbacken (11), wobei jede dritte bis n-te Formbacke (11) eine sich von der ersten Kavität (7) und der zweiten Kavität (10) geometrisch unterscheidende dritte bis n-te Kavität (12) aufweist, wobei mit Hilfe der dritten bis n-ten Rücklaufbahn (24, 25) im Betrieb des Corrugators (4) einzelne erste Formbacken (6), einzelne zweite Formbacken (9) und/oder einzelne dritte bis n-te Formbacken (11) aus der ersten Rücklaufbahn (20, 21) ausschleusbar und/oder in diese einschleusbar sind.

10. Corrugator nach einem der Ansprüche 1 - 9, wobei die zweite Rücklaufbahn (22, 23) einen Ausschleusabschnitt (28, 29) und/oder einen Einschleusabschnitt (34, 35) aufweist und wobei der Ausschleusabschnitt (28, 29) und/oder der Einschleusabschnitt (34, 35) schräg zu der ersten Rücklaufbahn (20, 21) angeordnet sind.

11. Extrusionsanlage (1) mit einem Corrugator (4) nach einem der Ansprüche 1 - 10 und einem dem Corrugator (4) vorgeschalten Extruder (3).

12. Verfahren zum Betreiben eines Corrugators (4) nach einem der Ansprüche 1 - 10, wobei der Corrugator (4) eine Vielzahl Formbacken (6, 9, 11), eine Führungsbahn (13), zwei erste Rücklaufbahnen (20, 21) und zwei zweite Rücklaufbahnen (22, 23) umfasst, wobei das Verfahren die folgenden Schritte umfasst:
Jeweils paarweises Führen (S1) der Formbacken (6, 9, 11) entlang der Führungsbahn (13) von einem Anfangsbereich (14) der Führungsbahn (13) hin zu einem Ausgangsbereich (15) der Führungsbahn (13),
Führen (S2) der Formbacken (6, 9, 11) von dem Ausgangsbereich (15) hin zu dem Anfangsbereich (14) entlang der ersten Rücklaufbahn (20, 21),
Ausschleusen (S3) einzelner Formbacken (6, 9, 11) aus der ersten Rücklaufbahn (20, 21) in die zweite Rücklaufbahn (22, 23), und/oder
Einschleusen (S4) einzelner Formbacken (6, 9, 11) aus der zweiten Rücklaufbahn (22, 23) in die erste Rücklaufbahn (20, 21).

13. Verfahren nach Anspruch 12, wobei die einzelnen Formbacken (6, 9, 11) so aus der ersten Rücklaufbahn (20, 21) ausgeschleust werden und/oder so in die erste Rücklaufbahn (20, 21) eingeschleust werden, dass eine Bewegungsrichtung der einzelnen Formbacken (6, 9, 11) bei dem Ausschleusen und/oder bei dem Einschleusen jeweils schräg in einem Winkel (α, γ) relativ zu einer Bewegungsrichtung (B20, B21) der Formbacken (6, 9, 11) entlang der ersten Führungsbahn (20, 21) orientiert ist.

14. Verfahren nach Anspruch 12 oder 13, wobei jeweils eine Markierung (40), insbesondere eine RFID-Markierung, der Formbacken (6, 9, 11) mit Hilfe einer Erfassungseinrichtung (39) erfasst wird und wobei mit Hilfe einer Steuereinrichtung (38) eine Ausschleuseinrichtung (26, 27) und/oder eine Einschleuseinrichtung (32, 33) so angesteuert wird, dass in Abhängigkeit von der erfassten Markierung (40) die einzelnen Formbacken (6, 9, 11) aus der ersten Rücklaufbahn (20, 21) ausgeschleust und/oder in diese eingeschleust werden.

15. Verfahren nach einem der Ansprüche 12 - 14, wobei die Formbacken (6, 9, 11) entlang der Führungsbahn (13), der ersten Rücklaufbahn (20, 21) und der zweiten Rücklaufbahn (22, 23) parallel zueinander geführt werden.

## Claims

1. A corrugator (4) for an extrusion system (1) for shaping a tubular plastics product (2), having
a multiplicity of mold blocks (6, 9, 11),
a guide track (13) along which the mold blocks (6, 9, 11) in the operation of the corrugator (4) are guided in each case in pairs from a starting region (14) of the guide track (13) toward an outlet region (15) of the guide track (13),
two first return tracks (20, 21) which are disposed on both sides of the guide track (13) and along which the mold blocks (6, 9, 11) in the operation of the corrugator (4) are guided from the outlet region (15) toward the starting region (14), and
two second return track (22, 23) which are likewise disposed on both sides of the guide track (13) and with the aid of which individual mold blocks (6, 9, 11) in the operation of the corrugator (4) are capable of being extracted from the first return track (20, 21) and/or inserted into the latter,
**characterized in that**
the two second return tracks (22, 23) are disposed between the guide track (13) and the first return tracks (20, 21).

2. The corrugator as claimed in claim 1, wherein a direction of movement of the individual mold blocks (6, 9, 11) in an extraction of the latter from the first return track (20, 21) and/or in an insertion of the latter into the first return track (20, 21) is in each case oriented obliquely at an angle (α, y) relative to a direction of movement (B20, B21) of the mold blocks (6, 9, 11) along the first return track (20, 21).

3. The corrugator as claimed in claim 1 or 2, further comprising a first deflection installation (16, 17) for deflecting the mold blocks (6, 9, 11) from the first return track (20, 21) to the guide track (13), and a second deflection installation (18, 19) for deflecting the mold blocks (6, 9, 11) from the guide track (13) into the first return track (20, 21), wherein the mold blocks (6, 9, 11) in the operation of the corrugator (4) continuously move along the guide track (13) and the first return track (20, 21).

4. The corrugator as claimed in one of claims 1 to 3, further comprising an extraction installation (26, 27) for selectively extracting the individual mold blocks (6, 9, 11) from the first return track (20, 21) into the second return track (22, 23).

5. The corrugator as claimed in one of claims 1 to 4, further comprising an insertion installation (32, 33) for selectively inserting the individual mold blocks (6, 9, 11) from the second return track (22, 23) into the first return track (20, 21).

6. The corrugator as claimed in claim 5, wherein the mold blocks (6, 9, 11) comprise in each case a marker (40), in particular a RFID marker, wherein the corrugator (4) comprises a detection installation (39) for detecting the marker (40), and a control installation (38) which is specified for actuating the extraction installation (26, 27) and/or the insertion installation (32, 33) such that the individual mold blocks (6, 9, 11), depending on the marker (40) detected, are capable of being extracted from the first return track (20, 21) and/or inserted into the latter.

7. The corrugator as claimed in one of claims 1 to 6, further comprising a third to nth return track (24, 25) with the aid of which the individual mold blocks (6, 9, 11) in the operation of the corrugator (4) are capable of being extracted from the first return track (20, 21) and/or inserted into the latter.

8. The corrugator as claimed in one of claims 1 to 7, further comprising a multiplicity of first mold blocks (6) wherein each first mold block (6) has a first cavity (7), a multiplicity of second mold blocks (9) wherein each second mold block (9) has a second cavity (10) that differs from the first cavity (7) in terms of the geometry, wherein the first mold blocks (6) and the second mold blocks (9) in the operation of the corrugator (4) are guided in each case in pairs along the guide track (13) from the starting region (14) toward the outlet region (15), wherein the first mold blocks (6) and the second mold blocks (9) in the operation of the corrugator (4) are guided along the first return track (20, 21) from the outlet region (15) toward the starting region (14), and wherein individual first mold blocks (6) and/or individual second mold blocks (9) in the operation of the corrugator (4) with the aid of the second return track (22, 23) are capable of being extracted from the first return track (20, 21) and/or inserted into the latter.

9. The corrugator as claimed in claims 7 and 8, further comprising a multiplicity of third to nth mold blocks (11), wherein each third to nth mold block (11) has a third to nth cavity (12) that differs from the first cavity (7) and the second cavity (10) in terms of the geometry, wherein individual first mold blocks (6), individual second mold blocks (9), and/or individual third to nth mold blocks (11) in the operation of the corrugator (4) with the aid of the third to nth return track (24, 25) are capable of being extracted from the first return track (20, 21) and/or inserted into the latter.

10. The corrugator as claimed in one of claims 1 to 9, wherein the second return track (22, 23) has an extraction portion (28, 29) and/or an insertion portion (34, 35), and wherein the extraction portion (28, 29) and/or the insertion portion (34, 35) are/is disposed so as to be oblique to the first return track (20, 21).

11. An extrusion system (1) having a corrugator (4) as claimed in one of claims 1 to 10 and an extruder (3) disposed upstream of the corrugator (4).

12. A method for operating a corrugator (4) according to one of claims 1 to 10, wherein the corrugator (4) comprises a multiplicity of mold blocks (6, 9, 11), a guide track (13), two first return tracks (20, 21) and two second return tracks (22, 23), wherein the method comprises the following method steps:
guiding (S1) in each case in pairs the mold blocks (6, 9, 11) along the guide track (13) from a starting region (14) of the guide track (13) toward an outlet region (15) of the guide track (13),
guiding (S2) the mold blocks (6, 9, 11) along the first return track (20, 21) from the outlet region (15) toward the starting region (14),
extracting (S3) individual mold blocks (6, 9, 11) from the first return track (20, 21) into the second return track (22, 23), and/or
inserting (S4) individual mold blocks (6, 9, 11) from the second return track (22, 23) into the first return track (20, 21).

13. The method as claimed in claim 12, wherein the individual mold blocks (6, 9, 11) are extracted from the first return track (20, 21) and/or inserted into the first return track (20, 21) such that a direction of movement of the individual mold blocks (6, 9, 11) in the extraction and/or in the insertion is in each case oriented so as to be oblique at an angle (α, y) relative to a direction of movement (B20, B21) of the mold blocks (6, 9, 11) along the first guide track (20, 21).

14. The method as claimed in claim 12 or 13, wherein in each case a marker (40), in particular a RFID marker, of the mold blocks (6, 9, 11) is detected with the aid of a detection installation (39), and wherein an extraction installation (26, 27) and/or an insertion installation (32, 33) with the aid of a control installation (38) are/is actuated such that the individual mold blocks (6, 9, 11), depending on the marker (40) detected, are extracted from the first return track (20, 21) and/or inserted into the latter.

15. The method as claimed in one of claims 12 to 14, wherein the mold blocks (6, 9, 11) are guided so as to be mutually parallel along the guide track (13), the first return track (20, 21), and the second return track (22, 23).

## Revendications

1. Machine pour la formation de tubes annelés (4) pour une installation d'extrusion (1) pour le moulage d'un produit plastique en forme de tube (2), comportant
une multitude de coquilles de moule (6, 9, 11),
une piste de guidage (13), le long de laquelle les coquilles de moule (6, 9, 11) sont guidées par paires, lors du fonctionnement de la machine pour la formation de tubes annelés (4), d'une zone de départ (14) de la piste de guidage (13) à une zone de sortie (15) de la piste de guidage (13),
deux premières pistes de retour (20, 21), lesquelles sont disposées de part et d'autre de la piste de guidage (13) et le long desquelles les coquilles de moule (6, 9, 11) sont guidées lors du fonctionnement de la machine pour la formation de tubes annelés (4), de la zone de sortie (15) à la zone de départ (14),
deux deuxièmes pistes de retour (22, 23), lesquelles sont également disposées de part et d'autre de la piste de guidage (13) et à l'aide desquelles, lors du fonctionnement de la machine pour la formation de tubes annelés (4), des coquilles de moule individuelles (6, 9, 11) peuvent être éjectées hors de la première piste de retour (20, 21) et/ou introduites à l'intérieur de celle-ci ;
**caractérisé en ce que**
les deuxièmes pistes de retour (22, 23) sont disposées entre la piste de guidage (13) et les premières pistes de retour (20, 21).

2. Machine pour la formation de tubes annelés selon la revendication 1, dans laquelle une direction de déplacement des coquilles de moules individuelles (6, 9, 11) lors d'une éjection de ces dernières hors de la première piste de retour (20, 21) et/ou lors d'une introduction dans la première piste de retour (20,21) est orientée respectivement de biais d'un angle (α, γ) par rapport à une direction de déplacement (B20, B21) des coquilles de moule (6, 9, 11) le long de la première piste de retour (20, 21).

3. Machine pour la formation de tubes ondulés selon la revendication 1 ou 2, comprenant en outre un premier dispositif de déviation (16, 17) pour dévier les coquilles de moule (6, 9, 11) de la première piste de retour (20, 21) vers la piste de guidage (13) et un deuxième dispositif de déviation (18, 19) pour dévier les coquilles de moule (6, 9, 11) de la piste de guidage (13) vers la première piste de retour (20, 21), les coquilles de moule (6, 9, 11) se déplaçant, lors du fonctionnement de la machine pour la formation de tubes annelés (4), continuellement le long de la piste de guidage (13) et de la première piste de retour (20, 21).

4. Machine pour la formation de tubes annelés selon l'une des revendications 1 à 3, comprenant en outre un dispositif d'éjection (26, 27) pour l'éjection au choix des coquilles de moule individuelles (6, 9, 11) hors de la première piste de retour (20, 21) et dans la deuxième piste de retour (22, 23).

5. Machine pour la formation de tubes annelés selon l'une des revendications 1 à 4, comprenant en outre un dispositif d'introduction (32, 33) pour l'introduction au choix des coquilles de moules individuelles (6, 9, 11) provenant de la deuxième piste de retour (22, 23) dans la première piste de retour (20, 21).

6. Machine pour la formation de tubes annelés selon la revendication 5, dans laquelle les coquilles de moule (6, 9, 11) présentent chacune un marquage (40), en particulier un marquage RFID, la machine pour la formation de tubes annelés (4) comprenant un dispositif de détection (39) pour détecter le marquage (40) et un dispositif de pilotage (38) qui est apte à piloter le dispositif d'éjection (26, 27) et/ou le dispositif d'introduction (32, 33) de telle manière que les coquilles de moule (6, 9, 11) individuelles puissent être éjectées hors de la première piste de retour (20, 21) et/ou introduites dans celle-ci en fonction du marquage (40) détecté.

7. Machine pour la formation de tubes annelés selon l'une des revendications 1 à 6, comprenant en outre des troisième à énième pistes de retour (24, 25), à l'aide desquelles, lors du fonctionnement de la machine de formation de tubes annelés (4), les coquilles de moules individuelles (6, 9, 11) peuvent être éjectées hors de la première piste de retour (20, 21) et/ou introduites dans celle-ci.

8. Machine pour la formation de tubes annelés selon l'une des revendications 1 à 7, comprenant en outre une multitude de premières coquilles de moule (6), chaque première coquille de moule (6) présentant une première cavité (7), une multitude de deuxièmes coquilles de moule (9), chaque deuxième coquille de moule (9) présentant une deuxième cavité (10) se différenciant géométriquement de la première cavité (7), les premières coquilles de moule (6) et les deuxièmes coquilles de moule (9) étant guidées par paires, lors du fonctionnement de la machine de formation de tubes ondulés (4), le long de la piste de guidage (13) de la zone de départ (14) jusqu'à la zone de sortie (15), les premières coquilles de moule (6) et les deuxièmes coquilles de moule (9) étant guidées, lors du fonctionnement de la machine pour la formation de tubes annelés (4), le long de la première piste de retour (20, 21) de la zone de sortie (15) à la zone de départ (14) et les premières coquilles de moule (6) individuelles et/ou les deuxièmes coquilles de moule (9) individuelles pouvant être éjectées de la première piste de retour (20, 21) et/ou introduites dans celle-ci à l'aide de la deuxième piste de retour (22, 23) lors du fonctionnement de la machine pour la formation de tubes annelés (4).

9. Machine pour la formation de tubes annelés selon la revendication 7 et 8, comprenant en outre une multitude de troisièmes à énièmes coquilles de moule (11), chaque troisième à énième coquille de moule (11) présentant une troisième à énième cavité (12) se différentiant géométriquement de la première cavité (7) et de la deuxième cavité (10), les premières coquilles de moule (6) individuelles, les deuxièmes coquilles de moule (9) individuelles et/ou les troisième à énième coquilles de moule (11) individuelles pouvant être éjectées de la première piste de retour (20, 21) et/ou introduites dans celle-ci, à l'aide de la troisième à énième piste de retour (24, 25), lors du fonctionnement de la machine pour la formation de tubes annelés (4).

10. Machine pour la formation de tubes annelés selon l'une des revendications là 9, dans laquelle la deuxième piste de retour (22, 23) présente une zone d'éjection (28, 29) et/ou une zone d'introduction (34, 35) et dans laquelle la zone d'éjection (28, 29) et/ou la zone d'introduction (34, 35) est/sont disposée(s) en biais par rapport à la première piste de retour (20, 21).

11. Installation d'extrusion (1) avec une machine pour la formation de tubes annelés (4) selon l'une des revendications 1 à 10 et une extrudeuse (3) raccordée en amont de cette machine pour la formation de tubes annelés (4).

12. Procédé pour le pilotage d'une machine pour la formation de tubes annelés (4) selon l'une des revendications 1 à 10, dans lequel la machine pour la formation de tubes annelés (4) comprend une multitude de coquilles de moule (6, 9, 11), une piste de guidage (13), deux premières pistes de retour (20, 21) et deux deuxièmes pistes de retour (22, 23), ce procédé comprenant les étapes suivantes :
guidage (S1) des coquilles de moule (6, 9, 11) par paires le long de la piste de guidage (13) d'une zone de départ (14) de la piste de guidage (13) à une zone de sortie (15) de la piste de guidage (13),
guidage (S2) des coquilles de moule (6, 9, 11) de la zone de sortie (15) à la zone de départ (14) le long de la première piste de retour (20, 21),
éjection (S3) des coquilles de moule (6, 9, 11) individuelles hors de la première piste de retour (20, 21) et vers la deuxième piste de retour (22, 23), et/ou
introduction (S4) des coquilles de moule (6, 9, 11) individuelles provenant de la deuxième piste de retour (22, 23) dans la première piste de retour (20, 21).

13. Procédé selon la revendication 12, dans lequel les coquilles de moule (6, 9, 11) individuelles sont éjectées de la première piste de retour (20, 21) et/ou introduites dans la première piste de retour (20, 21) de telle sorte qu'une direction de déplacement des coquilles de moule (6, 9, 11) individuelles soit orientée lors de l'éjection et/ou de l'introduction respectivement de biais d'un angle (a, y) par rapport à une direction de déplacement (B20, B21) des coquilles de moule (6, 9, 11) le long de la première piste de guidage (20, 21).

14. Procédé selon la revendication 12 ou 13, dans lequel un marquage (40), en particulier un marquage RFID, des coquilles de moule (6, 9, 11) est détecté individuellement à l'aide d'un dispositif de détection (39) et dans lequel à l'aide d'un dispositif de pilotage (38) un dispositif d'éjection (26, 27) et/ou un dispositif d'introduction (32, 33) est piloté de telle sorte que les coquilles de moule (6, 9, 11) individuelles soient éjectées hors de la première piste de retour (20, 21) et/ou introduites dans celle-ci, en fonction du marquage (40) détecté.

15. Procédé selon l'une des revendications 12 à 14, dans lequel les coquilles de moule (6, 9, 11) sont guidées parallèlement les unes aux autres le long de la piste de guidage (13), de la première piste de retour (20, 21) et de la deuxième piste de retour (22, 23).
